Europäisches Patentamt

European Patent Office

Office européen des brevets

(11) Veröffentlichungsnummer : **0 089 066
B1**

(12) **EUROPÄISCHE PATENTSCHRIFT**

(45) Veröffentlichungstag der Patentschrift :
12.11.86

(21) Anmeldenummer : 83102615.8

(22) Anmeldetag : 17.03.83

(51) Int. Cl.⁴ : **B 05 D** 7/14, C 08 J 5/12,
C 09 D 5/16, C 09 D 3/82

(54) Verfahren zum Verstärken des Haftens von Organopolysiloxanelastomeren.

(30) Priorität : 17.03.82 DE 3209755

(43) Veröffentlichungstag der Anmeldung :
21.09.83 Patentblatt 83/38

(45) Bekanntmachung des Hinweises auf die Patenterteilung : 12.11.86 Patentblatt 86/46

(84) Benannte Vertragsstaaten :
BE DE FR GB IT NL

(56) Entgegenhaltungen :
EP-A- 0 032 597
FR-A- 2 089 420
US-A- 3 691 206
US-A- 3 702 778
US-A- 4 243 718

(73) Patentinhaber : WACKER-CHEMIE GMBH
Prinzregentenstrasse 22
D-8000 München 22 (DE)

(72) Erfinder : Höhl, Horst
Pfaffenwinkel 28
D-8000 München 70 (DE)
Erfinder : Kochs, Peter, Dr.
Am Waldspitz 28
D-8000 München 70 (DE)

## Beschreibung

Als Stand der Technik auf dem Gebiet der Verstärkung des Haftens von Organopolysiloxanelastomeren auf Unterlagen, auf denen diese Elastomeren erzeugt wurden, mittels einer Grundierung, wobei die so erhaltenen Verbunde der Einwirkung von Wasser ausgesetzt sind, wird US 4 133 938 (veröffentlicht 9. Januar 1979, Th. G. Bingham, SWS Silicones Corporation) genannt.

Gegenstand der Erfindung ist ein Verfahren zum Verstärken des Haftens von Organopolysiloxanelastomeren, die aus bei Raumtemperatur vernetzbaren Massen hergestellt wurden, auf Unterlagen durch Auftragen einer Grundierung auf die Unterlage vor dem Auftragen der zum Elastomeren vernetzbaren Masse, wobei diese Masse zusätzlich zu Diorganopolysiloxan, das vernetzbar ist, Vernetzungsmittel und Katalysator, als mindestens einen weiteren Bestandteil bzw. als mindestens einen Teil weiterer Bestandteile einen Stoff, der nach dem Vernetzen der Masse noch fließfähig ist, oder stäbchenförmiges Mischpolymerisat aus Styrol und n-Butylacrylat enthält, das durch Mischpolymerisation der genannten Monomeren mittels freier Radikale in Gegenwart vom Diorganopolysiloxan erzeugt wurde, oder sowohl derartiges Mischpolymerisat als auch einen Stoff, der nach dem Vernetzen der Masse noch fließfähig ist, enthält und wobei Vernetzungsmittel und Katalysator in der Masse erst mehr oder weniger kurz vor dem Auftragen der Masse auf die Grundierung miteinander vereinigt werden, dadurch gekennzeichnet, daß als Grundierung eine Schicht, die zumindest teilweise aus vernetztem Organopolysiloxan aus $SiO_{4/2}$-Einheiten, Trimethylsiloxaneinheiten und Vinyldimethylsiloxaneinheiten besteht und eine auf dieser Schicht aufgetragene und mindestens teilweise vernetzte Schicht aus Organopolysiloxanelastomer, das aus unter Ausschluß von Wasser lagerfähiger, bei Zutritt von Wasser bei Raumtemperatur vernetzender Masse hergestellt wurde, verwendet wird.

Das erfindungsgemäße Verfahren hat besonders große Bedeutung bei Unterlagen, die aus Festkörperoberflächen bestehen, die sich so lange unter Lebewesen enthaltendem Wasser befinden, daß sich auf ihnen ohne Behandlung Bewuchs bilden würde. Beispiele für derartige Oberflächen sind solche aus Glas, Holz, Kunststoff, wie Epoxyharz, einschließlich Haftlacken auf der Basis Epoxid-Teer, oder mit Glasfaser verstärktem Polyester, anorganischem Baustoff, wie Beton oder Metall, z. B. Eisen bzw. Stahl, von z. B. Schiffsrümpfen, Bojen, Seeminen, den Pfeilern von Bohrinseln oder Brücken, von Behältern, einschließlich Badebecken, und Rohren. Bei dem Lebewesen enthaltendem Wasser, dem die erfindungsgemäß behandelten Unterlagen ausgesetzt werden können, kann es sich um Meer- oder Süßwasser, insbesondere Meerwasser handeln. Das Wasser kann stehen oder fließen.

Bei Raumtemperatur vernetzbare Organopolysiloxanmassen, in die Vernetzungsmittel und Katalysator mehr oder weniger kurz vor der endgültigen Verwendung eingemischt werden, sind sogenannte « Zweikomponentenmassen » oder « Zweikomponentensysteme ».

Die Herstellung von zu Organopolysiloxanelastomeren vernetzbaren Zweikomponentenmassen, die zusätzlich zu mindestens Diorganopolysiloxan, das vernetzbar ist, Vernetzungsmittel und Katalysator stäbchenförmiges Mischpolymerisat aus Styrol und n-Butylacrylat enthalten, das durch Mischpolymerisation der genannten Monomeren, also von Styrol und n-Butylacrylat, mittels freier Radikale in Gegenwart von Diorganopolysiloxan erzeugt wurde, ist vielfach beschrieben worden und muß daher hier nicht wieder näher erläutert werden. Diese Herstellung ist z. B. in der eingangs genannten US-PS 4 133 938, Beispiel 6, US 3 555 109 (veröffentlicht 12. Januar 1971, I. C. Getson, Stauffer-Wacker Silicone Corporation), Beispiel 6 und 8 und US 4 032 499 (veröffentlicht 28. Juni 1977, F.-H. Kreuzer et al., Consortium für Elektrochemische Industrie GmbH) Beispiel 6, eingehend beschrieben. Derartige Massen sind im Handel erhältlich.

Vorzugsweise bestehen die stäbchenförmigen Mischpolymerisate, die in Gegenwart von Diorganopolysiloxan durch Mischpolymerisation mittels freier Radikale erzeugt wurden, zu 45 bis 75 Gewichtsprozent aus sich von Styrol ableitenden Einheiten und zum Rest aus sich von n-Butylacrylat ableitenden Einheiten.

Vorzugsweise beträgt die Menge von Diorganopolysiloxan 20 bis 60 Gewichtsprozent, bezogen auf das Gesamtgewicht von Diorganopolysiloxan und Mischpolymerisat aus Styrol und n-Butylacrylat.

Insbesondere wegen der leichten Zugänglichkeit sind vorzugsweise mindestens 80 % der Anzahl der organischen Reste in den Diorganosiloxaneinheiten Methylreste.

Vorzugsweise haben die Diorganopolysiloxane, in deren Gegenwart stäbchenförmiges Mischpolymerisat aus Styrol und n-Butylacrylat erzeugt wird, eine durchschnittliche Viskosität von 150 bis 6 000 mPa · s bei 25 °C.

Bei dem Stoff, der nach dem Vernetzen der Organopolysiloxanmasse zum Elastomeren noch fließfähig ist, kann es sich um bei Raumtemperatur flüssige, durch Triorganosiloxygruppen endblockierte Diorganopolysiloxan (vgl. GB-PS 14 70 465, veröffentlicht 14. April 1977, The International Paint Company Limited) oder um fließfähige von Metall und Silicium freie organische Verbindungen handeln (vgl. DE-OS 2 756 495, offengelegt 22. Juni 1978, Shell International Research Maatschappij B. V.) oder auch um Gemische aus derartigen fließfähigen organischen Verbindungen und derartigen fließfähigen Organopolysiloxanen handeln. Auch zu Organopolysiloxanelastomeren vernetzbare Zweikomponentenmassen, die sowohl bei Raumtemperatur flüssige, durch Triorganosiloxgruppen endblockierte Diorganopolysiloxane oder andere nach dem Vernetzen der Masse noch fließfähige organische Verbindungen als auch stäbchenförmiges Mischpolymerisat aus Styrol und n-Butylacrylat enthalten, das durch Mischpolymerisation der genannten Monomeren mittels freier Radikale in Gegenwart von Diorganopolysiloxan erzeugt wurde, sind bereits bekannt (vgl. European Patent Application 0032597, veröffentlicht 29. Juli 1981, Shell Internationale Research Maatschappij B. V.).

Die wichtigsten Beispiele für bei Raumtemperatur flüssige durch Triorganosiloxgruppen endblockierten Diorganopolysiloxane sind durch Trimethylsiloxgruppen endblockierte Dimethylpolysiloxane, durch Trimethylsiloxgruppen endblockierte Methylphenylsiloxane, durch Trimethylsiloxangruppen endblockierte Mischpolymerisate aus Dimethylsiloxan- und Methylphenylsiloxaneinheiten, durch Trimethylsiloxgruppen endblockierte Mischpolymerisate aus Dimethylsiloxan- und Diphenylsiloxaneinheiten und durch Trimethylsiloxgruppen endblockierte Mischpolymerisate aus Dimethylsiloxan-, Methylphenylsiloxan- und Diphenylsiloxaneinheiten.

Die wichtigsten Beispiele für fließfähige von Metall und Silicium freie organische Verbindungen sind Polyisobutylene mit einem Molekulargewicht von 350 und technisches Weißöl sowie Trikresylphosphat.

Der Stoff, der nach dem Vernetzen der Organopolysiloxanmasse zum Elastomeren noch fließfähig ist, ist in dieser Masse vorzugsweise in Mengen von 10 bis 80 Gewichtsprozent, bezogen auf das Gesamtgewicht von solchem Stoff, zu vernetzendem Organopolysiloxan und gegebenenfalls vorhandenem stäbchenförmigem Mischpolymerisat aus Styrol und n-Butylacrylat, vorhanden.

Die wichtigsten Beispiele für Vernetzer in Zweikomponentenmassen der im Rahmen der Erfindung verwendeten Art sind Polyethylsilikat mit einem $SiO_2$-Gehalt von 34 bis 40 Gew.% und Hexaethoxydisiloxan.

Wichtigste Beispiele für Katalysatoren in Zweikomponentenmassen der erfindungsgemäß verwendeten Art sind Zinnverbindungen, wie Dibutylzinndilaurat und Dibutylzinndiacrylate, wobei sich die Acrylatgruppen jeweils von einem Gemisch aus 9 bis 11 Kohlenstoffatome je Molekül aufweisenden Carbonsäuren, worin die Carboxylgruppe bei mindestens 90 Gewichtsprozent der Säuren an ein tertiäres Kohlenstoffatom gebunden ist, ableiten (sogenanntes « Dibutylzinndiversatat »).

Die Herstellung von Schichten, die zumindest teilweise aus vernetztem Organopolysiloxan aus $SiO_{4/2}$-Einheiten, Trimethylsiloxaneinheiten und Vinyldimethylsiloxaneinheiten bestehen, als Grundierungen ist bekannt und Zusammensetzungen zur Herstellung solcher Schichten sind im Handel erhältlich. Hierzu wird z. B. auf das Merkblatt « Wackersilicone » SM 12-121. 803, April 1980, Seite 1 und 2 verwiesen.

Die Herstellung von Schichten aus Organopolysiloxanpolymer, das aus unter Ausschluß von Wasser lagerfähiger, bei Zutritt von Wasser bei Raumtemperatur vernetzender Masse hergestellt wurde, ist ebenfalls bekannt und vielfach beschrieben worden. Sie muß daher auch hier ebenfalls nicht mehr erläutert werden. Auch derartige Massen sind im Handel erhältlich. Bevorzugt unter den unter Ausschluß von Wasser lagerfähigen, bei Zutritt von Wasser bei Raumtemperatur vernetzenden Massen sind solche, bei deren Vernetzung Essigsäure oder Amin, wie sec.-Butylamin oder Cyclohexylamin, frei wird.

Die bei dem erfindungsgemäßen Verfahren eingesetzten Grundiermittel können in einem organischen Lösungsmittel, wie Toluol oder einem Gemisch aus Xylolisomeren, gelöst bzw. dispergiert sein. Ebenso können die bei dem erfindungsgemäßen Verfahren eingesetzten, zu Organopolysiloxanelastomeren vernetzbaren Zweikomponentenmassen in einem organischen Lösungsmittel, wie Testbenzin, gelöst bzw. dispergiert sein.

Das Auftragen der im Rahmen des erfindungsgemäßen Verfahrens eingesetzten Mischungen auf die Unterlagen kann z. B. durch Streichen, Gießen, Sprühen oder Aufwalzen erfolgen.

In dem folgenden Beispiel und Vergleichsversuch beziehen sich alle Angaben von Teilen und Prozentsätzen auf das Gewicht, soweit nichts anderes angegeben ist.

Beispiel

Auf Stahlblech wird Haftlack auf der Basis Epoxid-Teer aufgetragen. 72 Stunden nach diesem Auftragen wird auf diese Schicht durch Tauchen eine Mischung aus

10 Teilen Polyethylsilikat mit einem $SiO_2$-Gehalt von etwa 34 %
10 Teilen Butyltitanat
10 Teilen eines Organopolysiloxans aus $SiO_{4/2}$-Einheiten, Trimethylsiloxaneinheiten und Vinyldimethylsiloxaneinheiten im Molverhältnis von 1 : 0,8 : 0,1

in Form einer 60 %-igen Lösung in Toluol aufgetragen.

Eine Stunde nach dem Auftragen dieser Organopolysiloxan enthaltenden Mischung wird auf die aus dieser Mischung erzeugte Schicht als unter Ausschluß von Wasser lagerfähige, bei Zutritt von Wasser bei Raumtemperatur zu einem Elastomeren vernetzende Masse eine solche aufgetragen, die durch Vermischen von

100 Teilen eines in den endständigen Einheiten Si-gebundene Hydroxylgruppe aufweisenden Dimethylpolysiloxans mit einer Viskosität von etwa 80 000 mPa · s bei 25 °C
mit
20 Teilen eines Siliciumdioxyds mit einer Oberfläche von 150 m²/g, dessen Silanolgruppen teilweise durch Trimethylsiloxygruppen ersetzt sind,

5   Teilen Methyltriacetoxysilan
0,5 Teilen Di-tert.-butoxydiacetoxysilan

hergestellt worden ist,
aufgetragen. Zwei Stunden nach dem Auftragen dieser Masse wird auf die daraus erzeugte Schicht als zum Elastomeren vernetzbare Masse, die zusätzlich zu Diorganopolysiloxan, das vernetzbar ist, Vernetzungsmittel und Katalysator als mindestens einen weiteren Bestandteil einen Stoff enthält, der nach dem Vernetzen der Masse noch fließfähig ist und wobei Vernetzungsmittel und Katalysator erst mehr oder weniger kurz vor dem Auftragen der Masse auf die Grundierung eingemischt wurden, eine Mischung aus

100 Teilen eines Gemisches, das seinerseits aus

62,5 Teilen eines in den endständigen Einheiten je eine Si-gebundene Hydroxylgruppe aufweisenden Dimethylpolysiloxans mit einer Viskosität von etwa 1 000 mPa · s bei 25 °C
62,5 Teilen Siliciumdioxyd
2   Teilen Eisenoxid
4   Teilen Calciumcarbonat

besteht,

20 Teilen eines durch Trimethylsiloxygruppen endblockierten Dimethylpolysiloxans mit einem mittleren Molekulargewicht von etwa 16 000

und kurz vor dem Auftragen eingemischten

3 Teilen eines Gemisches, das seinerseits aus

3   Teilen Polyethylsilikat mit einem $SiO_2$-Gehalt von etwa 34 %
1   Teil Dibutylzinndiacrylaten, wobei sich die Acrylatgruppen jeweils von einem Gemisch aus 9 bis 11 Kohlenstoffatomen je Molekül aufweisenden Carbonsäuren ableiten, worin die Carboxylgruppe bei mindestens 90 % der Säuren an ein tertiäres Kohlenstoffatom gebunden ist,
besteht,
mittels eines Streichmessers aufgetragen. Auf diese Beschichtung wird vor dem Beginn ihrer merklichen Vernetzung ein dünner, mit dem oben angegebenen Haftlack beschichteter und dann in gleicher Weise wie oben angegeben weiterhin beschichteter Stahlblechstreifen ebenfalls vor dem Beginn der merklichen Vernetzung der zum Elastomeren vernetzbaren Masse überlappend gelegt und leicht angedrückt.
Die so erhaltene Anordnung wird 7 Tage bei 23 °C und einem relativen Wassergehalt der Luft (« Luftfeuchte ») von 50 % gelagert. Danach wird der Blechstreifen mit einer Geschwindigkeit von 200 mm/Minute abgezogen. Die dabei bestimmte Scherhaftung beträgt 116 N/cm².

Vergleichsversuch

Die im Beispiel angegebene Arbeitsweise wird wiederholt mit der Abänderung, daß als Grundierung eine Mischung aus

17 Teilen Butyltitanat
11 Teilen Tetra-n-propylsilan
8 Teilen Tetra-(methoxyethylen)-silan
4 Teilen Methyltris-(methoxyethylen)-silan

in Form einer 10 %-igen Lösung in Testbenzin verwendet wird.
Die wie im Beispiel angegeben nach dem siebentägigen Lagern bei 23 °C und 50 % Luftfeuchte bestimmte Scherhaftung beträgt 92,4 N/cm².

**Patentansprüche**

1. Verfahren zum Verstärken des Haftens von Organopolysiloxanelastomeren, die aus bei Raumtemperatur vernetzbaren Massen hergestellt wurden, auf Unterlagen durch Auftragen einer Grundierung auf die Unterlage vor dem Auftragen der zum Elastomeren vernetzbaren Masse, wobei diese Masse zusätzlich zu Diorganopolysiloxan, das vernetzbar ist, Vernetzungsmittel und Katalysator, als mindestens einen weiteren Bestandteil bzw. als mindestens einen Teil weiterer Bestandteile einen Stoff, der nach dem Vernetzen noch fließfähig ist, oder stäbchenförmiges Mischpolymerisat aus Styrol und n-Butylacrylat enthält, das durch Mischpolymerisation der genannten Monomeren mittels freier Radikale in Gegenwart von Diorganopolysiloxan erzeugt wurde, oder sowohl derartiges Mischpolymerisat als auch einen Stoff, der nach dem Vernetzen der Masse noch fließfähig ist, enthält und wobei Vernetzungsmittel und Katalysator in die Masse erst mehr oder weniger kurz vor dem Auftragen der Masse auf die Grundierung eingemischt werden, dadurch gekennzeichnet, daß als Grundierung eine Schicht, die zumindest teilweise aus vernetztem Organopolysiloxan aus $SiO_{4/2}$-Einheiten, Trimethylsiloxaneinheiten und Vinyldimethylsiloxaneinheiten besteht und eine auf dieser Schicht aufgetragene und mindestens teilweise vernetzte Schicht aus Organopolysiloxanelastomer, das aus unter Ausschluß von Wasser lagerfähiger, bei Zutritt von Wasser bei Raumtemperatur vernetzender Masse hergestellt wurde, verwendet wird.

2. Verfahren nach Anspruch 1, dadurch gekennzeichnet, daß als unter Ausschluß von Wasser lagerfähige, bei Zutritt von Wasser bei Raumtemperatur vernetzende Masse solche, bei deren Vernetzung Essigsäure oder Amin frei wird, eingesetzt wird.

**Claims**

1. Process for strengthening the adhesion of organopolysiloxane elastomers, produced from compositions that can be cross-linked at room temperature, to supports, by applying a base coating to the support before applying the composition that can be cross-linked to form the elastomer, this composition containing, in addition to cross-linkable diorganopolysiloxane, a cross-linking agent and a catalyst, as at least one further constituent or as at least one component of further constituents, a substance that is still capable of flowing after cross-linking has taken place, or a rod-shaped copolymer of styrene and n-butyl acrylate which is produced by copolymerising the said monomers by means of free radicals in the presence of diorganopolysiloxane, or containing both a copolymer of that type and a substance that is still capable of flowing after the composition has been cross-linked, and the cross-linking agent and the catalyst being mixed into the composition only more or less shortly before the composition is applied to the base coating, characterised in that there is used as the base coating a layer that consists at least partly of a cross-linked organopolysiloxane having $SiO_{4/2}$ units, trimethylsiloxane units and vinyldimethylsiloxane units, and a layer of an organopolysiloxane elastomer that is applied to the former layer and is at least partially cross-linked, which organopolysiloxane elastomer is produced from a composition that can be stored with the exclusion of water and that cross-links on the admission of water at room temperature.

2. Process according to claim 1, characterised in that there is used as the composition that can be stored with the exclusion of water and that cross-links on the admission of water at room temperature, one that frees acetic acid or an amine on cross-linking.

**Revendications**

1. Procédé pour le renforcement de l'adhérence d'élastomères de polyorganosiloxanes, qui sont préparés à partir de masses réticulables à la température ambiante, sur des supports, par application d'une couche de fond sur les supports, avant l'application des masses réticulables en élastomères, lesdites masses contenant, en dehors d'un polydiorganosiloxane réticulable, d'un agent réticulant et d'un catalyseur, une substance, en tant que au moins un autre composant, ou en tant que au moins une partie d'autres composants, qui est encore fluide après la réticulation, ou un copolymère de styrène et d'acrylate de n-butyle en bâtonnets, lequel copolymère est obtenu par copolymérisation desdits monomères au moyen de radicaux libres en présence d'un polydiorganosiloxane, ou encore contenant un tel copolymère ainsi qu'une substance qui est encore fluide après la réticulation des masses, l'agent réticulant et le catalyseur étant tout d'abord combinés dans les masses, plus ou moins longtemps avant l'application des masses sur la couche de fond, caractérisé en ce que l'on utilise comme couche de fond une couche qui consiste au moins partiellement en polyorganosiloxane réticulé à base de motifs $SiO_{4/2}$, de motifs triméthylsiloxane, et de motifs vinyldiméthylsiloxane, ainsi qu'une couche au moins partiellement réticulée et déposée sur ladite couche, à base d'élastomère de polyorganosiloxane préparé à partir de masses qui sont stables au stockage à l'abri de l'eau, et qui sont réticulables à la température ambiante en présence d'eau.

2. Procédé selon la revendication 1, caractérisé en ce que l'on utilise, en tant que masse stable au stockage, à l'abri de l'eau et réticulable en présence d'eau, une masse dont la réticulation libère de l'acide acétique ou une amine.